# EUROPÄISCHE PATENTSCHRIFT

(11) **EP 0 417 550 B1**
(45) Veröffentlichungstag und Bekanntmachung des Hinweises auf die Patenterteilung: **21.04.1993**
(21) Anmeldenummer: 90116594.4
(22) Anmeldetag: 30.08.1990
(51) Int. Cl.: B23Q 3/155

(54) **Werkzeugmaschine mit automatischem Wechsel autonom angetriebener Werkzeugmagazine**
Machine tool with automatic changing of independently driver tool magazines
Machine-outil avec échange automatique de magasins indépendemment actionnés

(30) Priorität: 09.09.1989 DE 3930071
(43) Veröffentlichungstag der Anmeldung: 20.03.1991
(73) Patentinhaber: Chiron-Werke GmbH & Co. KG, 78532 Tuttlingen (DE)
(72) Erfinder: Winkler, Hans-Henning, Dr. Ing., D-7200 Tuttlingen (DE); Rütschle, Eugen, D-7202 Mühlheim (DE)
(74) Vertreter: Witte, Alexander, Dr.-Ing.

(56) Entgegenhaltungen:
- EP-A- 0 321 699
- DD-A- 215 269
- DE-A- 3 440 356
- US-A- 4 654 957
- PATENT ABSTRACTS OF JAPAN vol. 7, no. 55 (M-198)(1200) 05 März 1983, & JP-A-57 201147 (HITACHI SEIKI K.K.) 09 Dezember 1982,

## Beschreibung

Die Erfindung betrifft eine Werkzeugmaschine mit einem relativ zu einem Maschinentisch verfahrbaren und einen Spindelstock tragenden Fahrständer, an dem ein austauschbares Werkzeugmagazin angeordnet ist, mit einem raumfesten Gestell innerhalb des Verfahrbereiches des Fahrständers, an dem eine Mehrzahl von austauschbaren Werkzeugmagazinen angeordnet ist, und mit am Fahrständer sowie am Gestell angeordneten Übergabeeinrichtungen für den Austausch von Werkzeugmagazinen zwischen dem Gestell und dem Fahrständer.

Eine Werkzeugmaschine der vorstehend genannten Art ist aus dem Dokument DE-A-34 40 356 bekannt.

Werkzeugmaschinen der vorstehend genannten Art sind allgemein bekannt und werden als "Fahrständermaschinen" bezeichnet. Bei derartigen Werkzeugmaschinen, die als sogenanntes Bearbeitungszentrum für Fräs- und Bohrarbeiten ausgelegt sein können, werden mittels eines Werkzeugwechslers Werkzeughalter mit Werkzeugen zwischen dem Werkzeugmagazin und einer Aufnahme des Spindelstocks hin- und hertransportiert. Auf diese Weise ist es möglich, an Werkstücken, die auf dem Maschinentisch aufgespannt sind, nacheinander in vorgegebener Weise mittels einer numerischen Steuerung Bearbeitungsschritte auszuführen.

Bei immer komplexer werdenden Bearbeitungsaufgaben werden auch immer mehr verschiedenartige Werkzeuge benötigt, um ein Werkstück in einer einzigen Aufspannung zu bearbeiten. Man hat daher Werkzeugmaschinen der hier interessierenden Art mit Werkzeugmagazinen ausgestattet, die für eine Aufnahme möglichst vieler Werkzeughalter konstruiert sind. Da jedoch die Werkzeugmagazine zusammen mit dem Fahrstander verfahren werden, um einen Werkzeugwechsel an jeder Position relativ zum Maschinentisch ausführen zu können, sind Grenzen gesetzt, weil bei zu großen Werkzeugmagazinen die zu bewegenden Massen ebenfalls zu groß werden.

In dem eingangs genannten Dokument DE-A-34 40 356 ist eine Werkzeugmaschine mit automatischem Wechsel der Werkzeuge und der Werkzeugmagazine beschrieben. Diese bekannte Werkzeugmaschine verfügt über eine horizontalachsige Spindel. Seitlich neben dem Spindelstock ist an einer mit dem Spindelstock verfahrbaren Empfangsstation ein Werkzeugmagazin befestigt. Das Werkzeugmagazin enthält eine Endlosbahn, die eine vertikale Ebene aufspannt. In der Endlosbahn sind Werkzeuge geführt, deren Achsen sich ebenfalls in der Ebene erstrecken. Durch Bewegung der Endlosbahn kann ein ausgewähltes Werkzeug in eine vorderste Position der Endlosbahn gebracht werden, in der es mit seiner Achse parallel zur Spindelachse angeordnet ist. In der Mitte zwischen diesem Werkzeug und der Spindelaufnahme ist ein kurzer, doppelarmiger Wechselgreifer angeordnet, der ebenfalls um eine horizontale Achse drehbar ist. Mittels dieses Wechselgreifers können die Werkzeuge zwischen der Spindelaufnahme und der vordersten Position der Endlosbahn gewechselt werden.

Hinter dem verfahrbaren Spindelstock ist ein Speicher für weitere Werkzeugmagazine angeordnet, in dem mehrere, z.B. fünf Werkzeugmagazine nebeneinander gelagert sind. Der verfahrbare Spindelstock kann nun in eine Position verfahren werden, in der seine Empfangsstation mit einem der Speicherplätze des Werkzeugmagazin-Speichers fluchtet. In dieser Position kann das komplette Werkzeugmagazin zwischen dem Spindelstock und dem Werkzeugmagazin-Speicher gewechselt werden.

Bei der bekannten Werkzeugmaschine sind sämtliche aktiven Bewegungskomponenten am verfahrbaren Spindelstock angeordnet, und zwar sowohl der Antrieb für die Endlosbahn des in der Empfangsstation befindlichen Werkzeugmagazins wie auch der Übergabeantrieb, mit dem die Übergabe des Werkzeugmagazins aus dem Speicher zum Spindelstock bewerkstelligt wird.

Die bekannte Werkzeugmaschine hat damit den Nachteil, daß der Spindelstock ständig schwere und komplizierte Bewegungseinrichtungen mitschleppen muß, wodurch die Verfahrgeschwindigkeit und auch die Dynamik des Spindelstockantriebes herabgesetzt wird. Außerdem hat die bekannte Werkzeugmaschine den Nachteil, daß die im Speicher abgelegten Werkzeugmagazine vollständig passiv sind, also lediglich mittels der bereits genannten Übergabeantriebe aus dem Speicher herausgenommen werden können.

Entsprechendes gilt für eine weitere bekannte Werkzeugmaschine, die in dem Dokument US-A-4 240 194 beschrieben ist. Auch bei dieser bekannten Werkzeugmaschine kann das komplette Werkzeugmagazin zwischen einer Position am verfahrbaren Spindelstock und einer von mehreren raumfesten Speicherpositionen gewechselt werden. Bei dieser bekannten Werkzeugmaschine sind die Werkzeuge auf dem Umfang einer zylindrischen Trommel angeordnet, die um eine horizontale Achse drehbar ist. Auch die Werkzeuge sind in dieser Trommel horizontalachsig angeordnet und die Spindelachse verläuft ebenfalls horizontal. Bei dieser Werkzeugmaschine kommt nachteilig noch hinzu, daß die Werkzeuge in dem am Spindelstock befindlichen Werkzeugmagazin sich senkrecht zur Spindelachse erstrecken, so daß ein relativ komplizierter Werkzeugwechsler vorgesehen werden muß. Im übrigen ist auch diese bekannte Werkzeugmaschine mit den Nachteilen der weiter vorne beschriebenen bekannten Werkzeugmaschine behaftet, d.h. auch bei dieser bekannten Werkzeugmaschine befinden sich sämtliche aktiven Einheiten am verfahrbaren Spindelstock.

Aus dem Dokument DD-A-216 667 ist noch eine weitere Werkzeugmaschine bekannt, bei der ebenfalls komplette Werkzeugmagazine zwischen einem raumfesten Speicher und einem verfahrbaren Spindelstock gewechselt werden können. Auch diese bekannte Werkzeugmaschine hat eine horizontale Spindelachse. Allerdings sind bei dieser Werkzeugmaschine die Werkzeugmagazine in einem karussellartigen Speicher angeordnet, der nach Art einer horizontalachsigen Trommel ausgebildet ist, an dessen Peripherie sich Führungsschienen zur Aufnahme von Werkzeugmagazinen befinden, deren Werkzeuge sich in radialer Richtung zu dem Werkzeugmagazin-Speicher erstrecken.

Auch bei dieser bekannten Werkzeugmaschine sind alle für den Werkzeugmagazin-Wechsel erforderlichen Elemente ebenso wie die Antriebselemente für die Endlosbahn der Werkzeugmagazine am verfahrbaren Spindelstock angeordnet.

Aus dem Dokument DE-A-36 07 398 ist noch eine Werkzeugmaschine bekannt, bei der ein Werkzeugmagazin mit einer in einer Horizontalebene verlaufenden Endlosbahn auf der Rück- und Oberseite eines Bearbeitungszentrums fest angeordnet ist. Hinter diesem Werkzeugmagazin verläuft eine raumfeste Schiene, auf der entlang ein Werkzeugwagen im Raum verfahrbar ist. Der Werkzeugwagen enthält wiederum ein Werkzeugmagazin mit einer Endlosbahn in einer vertikalen Ebene. Der Werkzeugwagen kann in eine Übergabeposition hinter dem Bearbeitungszentrum verfahren werden. In dieser Übergabeposition kann mittels eines am Werkzeugwagen angeordneten Werkzeugwechslers ein Werkzeugwechsel zwischen dem Werkzeugmagazin am Bearbeitungszentrum und dem Werkzeugmagazin des Werkzeugwagens vorgenommen werden. Hierzu ist die Endlosbahn des Werkzeugmagazins am Werkzeugwagen mittels eines autonomen Antriebes verfahrbar.

Diese bekannte Werkzeugmaschine hat jedoch den Nachteil, daß das Bearbeitungszentrum oder zumindest dessen Magazin in eine raumfeste Position gebracht werden muß, während der Werkzeugwechsel zwischen dem Werkzeugmagazin des Bearbeitungszentrums und dem Werkzeugmagazin des Werkzeugwagens stattfindet. Aufgrund der Vielzahl zu wechselnder Werkzeuge wird hierzu einige Zeit benötigt, während der das Bearbeitungszentrum bzw. dessen Werkzeugmagazin keine eigene Bewegung im Raum durchführen darf. Bei dieser bekannten Werkzeugmaschine wird daher offenbar ein raumfestes Bearbeitungszentrum mit raumfesten Werkzeugmagazin vorausgesetzt. Außerdem ist unvermeidbar, daß während des Werkzeugwechsels zwischen den beiden genannten Werkzeugmagazinen das Bearbeitungszentrum nicht an Werkstücken arbeiten kann. In Anbetracht der sehr großen Werkzeugmagazine am Bearbeitungszentrum und am Werkzeugwagen ergibt sich damit eine erhebliche Stillstandszeit, weil es einige Zeit braucht, bis sämtliche Werkzeuge zwischen den beiden Werkzeugmagazinen hin- und hergewechselt sind.

Der Erfindung liegt daher die Aufgabe zugrunde, eine Werkzeugmaschine der eingangs genannten Art dahingehend weiterzubilden, daß die Rüstzeiten noch weiter vermindert werden, wenn von einer Bearbeitungsaufgabe zur nächsten Bearbeitungsaufgabe übergegangen werden soll.

Diese Aufgabe wird erfindungsgemäß dadurch gelöst, daß die Werkzeugmagazine mit einem autonomen Magazinantrieb versehen sind, der über lösbare Energie-Verbindungsmittel sowohl in einer Position des Werkzeugmagazins am Gestell wie auch am Fahrständer betreibbar ist.

Die der Erfindung zugrundeliegende Aufgabe wird auf diese Weise vollkommen gelöst, weil die im Gestell gespeicherten Werkzeugmagazine umgerüstet, d.h. mit neuen Werkzeughaltern bestückt werden können, während sich eines der Werkzeugmagazine am Fahrständer im Einsatz am Werkstück befindet. Es ist daher möglich, auch die Stillstandzeit der Werkzeugmaschine zwischen zwei Bearbeitungsaufgaben zu vermindern. Die höhere Werkzeugkapazität der erfindungsgemäßen Werkzeugmaschine kann in diesem Fall nämlich dazu benutzt werden, um während des Ablaufens einer Bearbeitungsaufgabe an einem Werkzeugtyp bereits am Gestell das Werkzeugmagazin für eine neue Bearbeitungsaufgabe an neuen Werkstücken vorzubereiten. Die Stillstandzeit der Werkzeugmaschine ist in diesem Fall auf die Umrüstzeit der Werkstücke auf dem Maschinentisch beschränkt. Es ist weiterhin möglich, daß die Bestückung des neuen Werkzeugmagazins während der Bearbeitung der alten Werkstücke durch dieselbe Bedienperson vorgenommen wird, die auch für die Steuerung der Werkzeugmaschine verantwortlich ist, weil der Bedienungsperson während der numerisch gesteuerten Bearbeitung der alten Werkstücke genügend Zeit bleibt, um das weitere Werkzeugmagazin (oder mehrere weitere Werkzeugmagazine) für neue Bearbeitungsaufgaben umzurüsten. Es kann also erfindungsgemäß auch das Personal der Werkzeugmaschinen zeitlich besser ausgelastet werden. Die Erfindung hat vor allem den Vorteil, daß auch in der Position des Werkzeugmagazins am Gestell ein Bestücken des Werkzeugmagazins vereinfacht wird, weil eine Bestückungsperson durch Betätigen des Magazinantriebes die verschiedenen Aufnahmen des Werkzeugmagazins in eine von außen zugängliche Bestückungsposition verfahren kann.

Bei einer bevorzugten Ausgestaltung der Erfindung weist der Spindelstock eine vertikale Achse auf und das Werkzeugmagazin ist mit einer Endlosbahn für Werkzeuge versehen, die sich parallel zu einem horizontalen Maschinentisch erstreckt.

Diese Maßnahmen haben den Vorteil, daß ein besonders einfacher Bewegungsablauf erreicht wird, und zwar sowohl beim Austauschen der Werkzeugmagazine wie auch beim Wechseln der Werkzeuge.

Bei einer bevorzugten Ausgestaltung der erfindungsgemäßen Werkzeugmaschine ist am Gestell ein Übergabeantrieb zum Verfahren eines Werkzeugmagazins zwischen dem Gestell und dem Fahrständer angeordnet.

Diese Maßnahme hat den Vorteil, daß die bewegten Massen am Fahrständer vermindert werden und daß außerdem keine zu großen Anforderungen an die Abmessungen des Übergabeantriebes zu stellen sind, wie dies der Fall wäre, wenn der Übergabeantrieb am bewegten Fahrständer angeordnet wäre.

Bei Ausführungsbeispielen der Erfindung können Werkzeugmagazine am Gestell nebeneinander und/oder untereinander angeordnet sein. Vorzugsweise ist dies auf der Rückseite der Werkzeugmaschine, d.h. an der von einem Kommandopult der Werkzeugmaschine abgewandten Seite, möglich.

Auf diese Weise können am Gestell viele Werkzeugmagazine nach Art einer Matrix angeordnet sein, die vom Fahrständer durch Verfahren in einer oder mehreren Koordinaten angefahren werden können.

Weitere Vorteile ergeben sich aus der Beschreibung und der beigefügten Zeichnung.

Es versteht sich, daß die vorstehend genannten und die nachstehend noch zu erläuternden Maßnahmen nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Vorderansicht eines Ausführungsbeispiels einer erfindungsgemäßen Werkzeugmaschine;
- Fig. 2: eine Draufsicht der Maschine gemäß Fig. 1;
- Fig. 3: eine Seitenansicht der Werkzeugmaschine gemäß Fig. 1.

In den Fig. bezeichnet 10 insgesamt ein Ausführungsbeispiel einer erfindungsgemäßen Werkzeugmaschine. Es handelt sich hier um ein sogenanntes Bearbeitungszentrum zum Ausführen von im wesentlichen Bohr- und Fräsarbeiten an Werkstücken.

Auf einem Fundament 11 ist ein Maschinentisch 12 und zwar ein Langbett-Maschinentisch angeordnet. Ein Fahrständer 13 ist relativ zum Maschinentisch 12 in an sich bekannter Weise verfahrbar. Am Fahrständer 13 befindet sich ein Spindelstock 14 mit einer vertikalen Spindelachse 15.

Üblicherweise ist die Anordnung so getroffen, daß der Fahrständer 13 in Längserstreckung des Maschinentisches 12 entlang einer horizontalen Achse verfahrbar ist. Der Spindelstock 14 ist auf dem Fahrständer 13 in einer weiteren, hierzu senkrechten horizontalen Achse sowie entlang einer vertikalen Achse verfahrbar. Die im Spindelstock 14 eingespannten Werkzeuge sind somit in mindestens drei Koordinaten verfahrbar, wie mit Pfeilen 16 angedeutet.

Die Werkzeugmaschine 10 wird numerisch gesteuert. Hierzu dient ein Kommandopult 17, das auf einer vorderen Steuerseite der Werkzeugmaschine 10 angeordnet ist.

Am Fahrständer 13 befindet sich ein Werkzeugmagazin 20, das sich im wesentlichen parallel zum Maschinentisch 12 erstreckt. Das Werkzeugmagazin 20 kann in der Draufsicht T- oder U-förmig ausgestaltet sein, wie dies an sich bekannt ist.

Das Werkzeugmagazin 20 ist austauschbar am Fahrständer 13 angeordnet.

Hierzu dient eine Übergabeeinrichtung 21, die sowohl am Fahrständer 13 wie auch an einem raumfesten Gestell 24 auf der Rückseite der Werkzeugmaschine 10 angeordnet ist. Die Übergabeeinrichtung 21 kann beispielsweise aus Schienen bestehen, die in einer Richtung senkrecht zur Längserstreckung des Maschinentisches 12 am Fahrständer 13 und am Gestell 24 angeordnet sind.

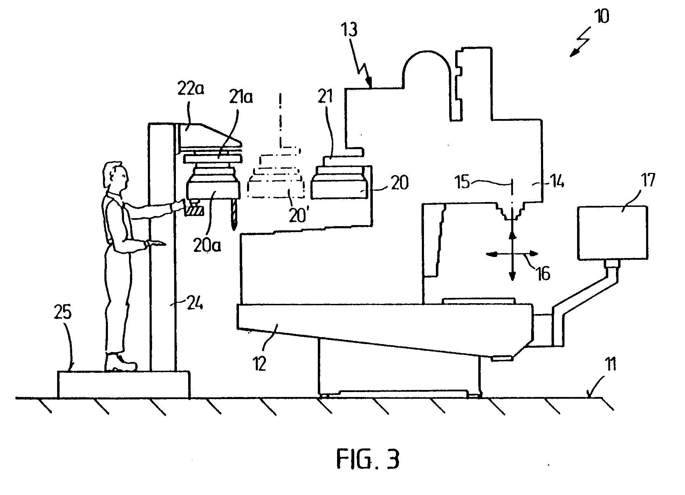

Um einen Austausch des Werkzeugmagazins 20 zwischen dem Fahrständer 13 und dem Gestell 24 zu bewirken, wird der Fahrständer 13 dann in eine Position verfahren, in der die Übergabeeinrichtung 21 von Fahrständer 13 und Gestell 24, beispielsweise die erwähnten Schienen, miteinander fluchten. Diese Position ist in Fig. 3 mit 20' angedeutet.

Sobald diese Position erreicht ist, wird ein am Gestell 24 angeordneter Übergabeantrieb 23 in Betrieb gesetzt, der das Werkzeugmagazin 20 von der Übergabeeinrichtung 21 des Fahrständers 13 in die komplementäre Übergabeeinrichtung 21 des Gestells 24 verschiebt. Der Übergabeantrieb 23 kann beispielsweise eine pneumatische Kolben-Zylinder-Einrichtung sein.

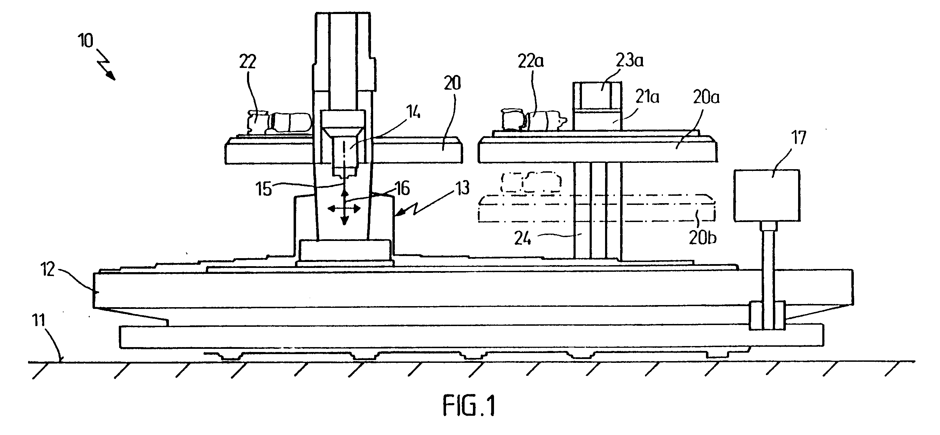

Um mehrere Werkzeugmagazine 20 am Gestell 24 zum Austausch bereitzuhalten, können diese nebeneinander angeordnet sein, wie mit 20, 20a in den Fig. eingezeichnet. Es ist aber auch eine Positionierung übereinander möglich, wie mit 20a, 20b in Fig. 1 angedeutet. Zur weiteren Erhöhung der Kapazität können Werkzeugmagazine aber auch übereinander und untereinander angeordnet sein. In diesem Falle muß der Fahrständer 13 mit der Übergabeeinrichtung 21 in vertikaler und horizontaler Richtung so lange verfahren werden, bis die jeweilige Übergabeposition erreicht ist.

In den Fig. ist mit 22 ein Magazinantrieb bezeichnet, der dazu dient, um die Werkzeughalter innerhalb des Werkzeugmagazins 20 entlang einer Endlosbahn zu befördern. Auf diese Weise kann jeder beliebige Werkzeughalter im Werkzeugmagazin zu einer Entnahme-/Bestückungsposition des Werkzeugmagazins 20 verfahren werden.

Während dies bei einem an den Fahrständer 13 angedockten Werkzeugmagazin 20 dazu dient, um nacheinander vorbestimmte Werkzeughalter für einen Werkzeugwechsel bereitzuhalten, kann der Magazinantrieb 22 auch in der Stellung des Werkzeugmagazins 20 am Gestell 24 dazu eingesetzt werden, um ein Umrüsten des Werkzeugmagazins 20 vorzunehmen.

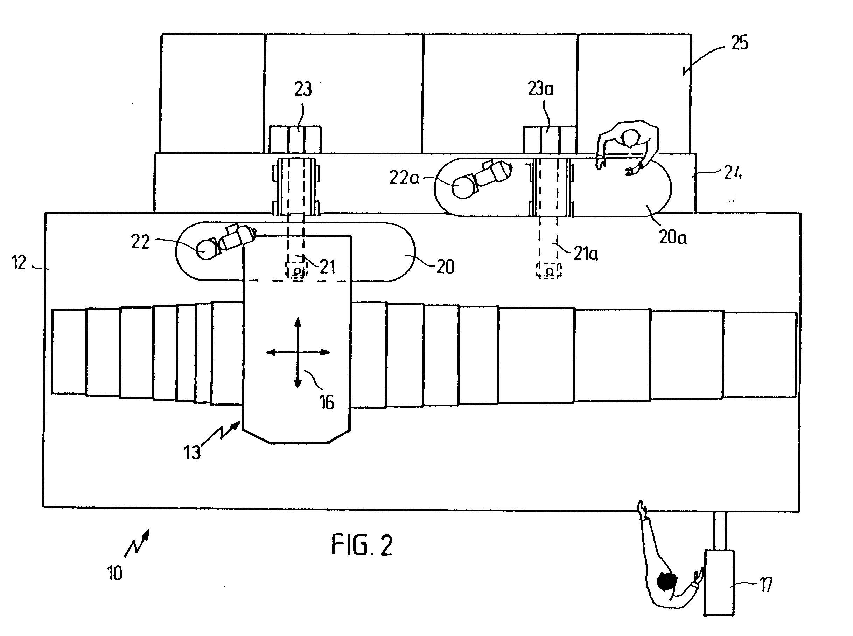

Hierzu ist in den Fig. 2 und 3 erkennbar, daß hinter der Werkzeugmaschine 10 eine Bestückungsposition 25 vorgesehen ist, in der die Werkzeughalter des in einer Gestellposition befindlichen Werkzeugmagazins 20a ausgetauscht werden können. Hierzu muß der Magazinantrieb 22 bzw. 22a über lösbare Verbindungsmittel mit Energie versorgt werden, wofür sowohl am Fahrständer 13 wie auch am Gestell 24 an sich bekannte steckbare oder sonstwie lösbare Verbindungsmittel vorzusehen sind.

## Patentansprüche

1. Werkzeugmaschine mit einem relativ zu einem Maschinentisch (12) verfahrbaren und einen Spindelstock (14) tragenden Fahrständer (13), an dem ein austauschbares Werkzeugmagazin (20) angeordnet ist, mit einem raumfesten Gestell (24) innerhalb des Verfahrbereiches des Fahrständers (13), an dem eine Mehrzahl von austauschbaren Werkzeugmagazinen (20a, 20b) angeordnet ist, und mit am Fahrständer (13) sowie am Gestell (24) angeordneten Übergabeeinrichtungen (21) für den Austausch von Werkzeugmagazinen (20, 20a, 20b) zwischen dem Gestell (24) und dem Fahrständer (13), dadurch gekennzeichnet, daß die Werkzeugmagazine (20, 20a, 20b) mit einem autonomen Magazinantrieb (22) versehen sind, der über lösbare Energie-Verbindungsmittel sowohl in einer Position des Werkzeugmagazins (20, 20a, 20b) am Gestell (24) wie auch am Fahrständer (13) betreibbar ist.

2. Werkzeugmaschine nach Anspruch 1, dadurch gekennzeichnet, daß am Gestell (24) ein Übergabeantrieb (23) zum Verfahren eines Werkzeugmagazins (20, 20a, 20b) zwischen dem Gestell (24) und dem Fahrständer (13) angeordnet ist.

3. Werkzeugmaschine nach Anspruch 1 oder 2, dadurch gekennzeichnet, daß der Spindelstock (14) eine vertikale Achse (15) aufweist, und daß das Werkzeugmagazin (20) mit einer Endlosbahn für Werkzeuge versehen ist, die sich parallel zur einem horizontalen Maschinentisch (12) erstreckt.

4. Werkzeugmaschine nach einem oder mehreren der Ansprüche 1 bis 3, dadurch gekennzeichnet, daß die Werkzeugmagazine (20, 20a) am Gestell (13) nebeneinander angeordnet sind.

5. Werkzeugmaschine nach einem oder mehreren der Ansprüche 1 bis 4, dadurch gekennzeichnet, daß die Werkzeugmagazine (20, 20a, 20b) am Gestell (13) untereinander angeordnet sind.

## Claims

1. A machine tool comprising a travelling column (13) being displaceable relative to a machine bed (12) and carrying a spindle stock (14), an exchangeable magazine tool (20) being attached to the travelling column (13), a stationary rack (24) being provided within the travelling area of the column (13), the rack (24) supporting a plurality of exchangeable tool magazines (20a, 20b), and transfer means (21) for the exchange of tool magazines (20, 20a, 20b) between the rack (24) and the travelling column (13) being arranged on the rack (24), characterized in that the tool magazines (20, 20a, 20b) are provided with an autonomous magazine drive (22) being operable via releasable energy connector means in a position of the tool magazine (20, 20a, 20b) on the rack (24) as well as in a position on the travelling column (13).

2. The machine tool of claim 1, characterized in that a transfer drive (23) is arranged on the rack (24) for transferring a tool magazine (20, 20a, 20b) between the rack (24) and the travelling column (13).

3. The machine tool of claim 1 or 2, characterized in that the spindle stock (14) has a vertical axis (15) and that the tool magazine (20) is provided with an endless path for the tools, the path extending parallel to a horizontal machine bed (12).

4. The machine tool of any of claims 1 through 3, characterized in that the tool magazines (20, 20a) are arranged side-by-side on the rack (13).

5. The machine tool of any of claims 1 through 4, characterized in that the tool magazines (20, 20a, 20b) are arranged above each other on the rack (13).

## Revendications

1. Machine-outil avec un support mobile (13), mobile par rapport à un plateau de machine-outil (12) et portant une poupée (14), sur lequel est disposé un magasin d'outils (20) interchangeable, avec un châssis (24) fixe dans l'espace à l'intérieur de la zone de circulation du support mobile (13), sur lequel est disposée une pluralité de magasins d'outils (20a, 20b) interchangeables, et comportant des dispositifs de transfert (21) disposés aussi bien sur le support mobile (13) que sur le châssis (24) pour l'échange de magasins d'outils (20, 20a, 20b) entre le châssis (24) et le support mobile (13), caractérisée en ce que les magasins d'outils (20, 20a, 20b) sont pourvus d'un entraînement de magasin (22) autonome, qui peut être actionné par l'intermédiaire de moyens de liaison énergétique amovibles aussi bien dans une position du magasin d'outils (20, 20a, 20b) sur le châssis (24) que sur le support mobile (13).

2. Machine-outil selon la revendication 1, caractérisée en ce qu'un entraînement de transfert (23) pour le déplacement d'un magasin d'outils (20, 20a, 20b) entre le châssis (24) et le support mobile (13) est prévu sur le châssis (24).

3. Machine-outil selon la revendication 1 ou 2, caractérisée en ce que la poupée (14) présente un axe vertical (15), et en ce que le magasin d'outils (20) est pourvu d'un parcours sans fin pour des outils, qui s'étend parallèlement à un plateau de machine-outil (12) horizontal.

4. Machine-outil selon l'une quelconque des revendications précédentes, caractérisée en ce que les magasins d'outils (20, 20a) sont disposés les uns à côté des autres sur le support (13).

5. Machine-outil selon l'une quelconque des revendications 1 à 4, caractérisée en ce que les magasins d'outils (20, 20a, 20b) sont disposés les uns en-dessous des autres sur le support (13).
